# EUROPEAN PATENT APPLICATION

(11) **EP 4 271 099 A1**
(43) Date of publication of application: **01.11.2023**
(21) Application number: 20967044.7
(22) Date of filing: 25.12.2020
(51) Int. Cl.: H04W 72/10, H04W 72/12

(54) **TERMINAL AND WIRELESS COMMUNICATION METHOD**

(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP); PI, Qiping, Beijing 100190 (CN)
(74) Representative: Hoffmann Eitle
(86) International application number: PCT/JP2020/048940
(87) International publication number: WO 2022/137559

(57) **Abstract**

A terminal performs multiplexing processing of a first traffic with a first priority and a second traffic with a second priority different from the first priority, and transmits a multiplexing result in which the first traffic and the second traffic are multiplexed. The terminal cancels an uplink transmission that uses radio resources overlapping with a transmission of the multiplexing result in the multiplexing process.

## Description

### [Technical Field]

The present disclosure relates to a terminal and a radio communication method for multiplexing uplink traffic.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

Release 16 of 3GPP introduces the Downlink Control Information (DCI) format 2_4, which allows cancellation of low-priority uplink (UL) transmissions to ensure (preempt) high-priority UL transmissions.

In Release 17 of 3 GPP, it was also agreed that UL traffic with different priorities should be multiplexed within the terminal (User Equipment, UE) (For example, non-patent literature 1).

### [Citation List]

### [Non-Patent Literature]

Non-Patent Literature 1: "Enhanced Industrial Internet of Things (IoT) and ultra-reliable and low latency communication," RP - 201310, 3GPP TSG RAN Meeting #88e, 3GPP, July 2020.

### [Summary of Invention]

However, regarding the multiplexing of UL traffic with different priorities mentioned above, the following problems are considered.

Specifically, multiplexing of UL traffic with different priorities is enabled, and even if the conditions for multiplexing are met, if a UL channel (For example, PUCCH (Physical Uplink Control Channel), Uplink Control Channel) overlaps a radio resource indicated by a UL transmit cancel indication (UL Cancel Indication (CI)), a dynamic slot format indication (SFI), a semi-static (semi-static) downlink (DL) symbol, or a synchronous signal block (SSB (SS/PBCH Block)), the UE is unable to determine how multiplexing processing should be performed.

Therefore, the following disclosure has been made in view of these circumstances, and the purpose is to provide terminals and radio communication methods that can more reliably achieve multiplexing of UL traffic with different priorities even if they overlap with radio resources by other indications such as UL CI.

One aspect of the disclosure is a terminal including a control unit (control unit 270) that performs multiplexing processing of a first traffic with a first priority and a second traffic with a second priority different from the first priority, and a transmission unit (radio signal transmission and reception unit 210) that transmits a multiplexing result in which the first traffic and the second traffic are multiplexed. The control unit cancels an uplink transmission that uses radio resources overlapping with a transmission of the multiplexing result in the multiplexing process.

### [Brief Description of Drawings]

[Fig. 1]

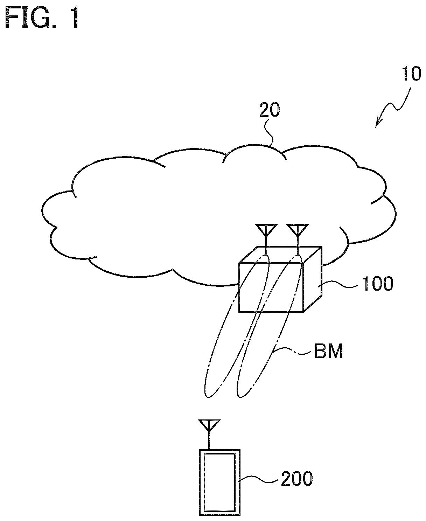

   Fig. 1 is an overall schematic diagram of radio communication system 10.
[Fig. 2]

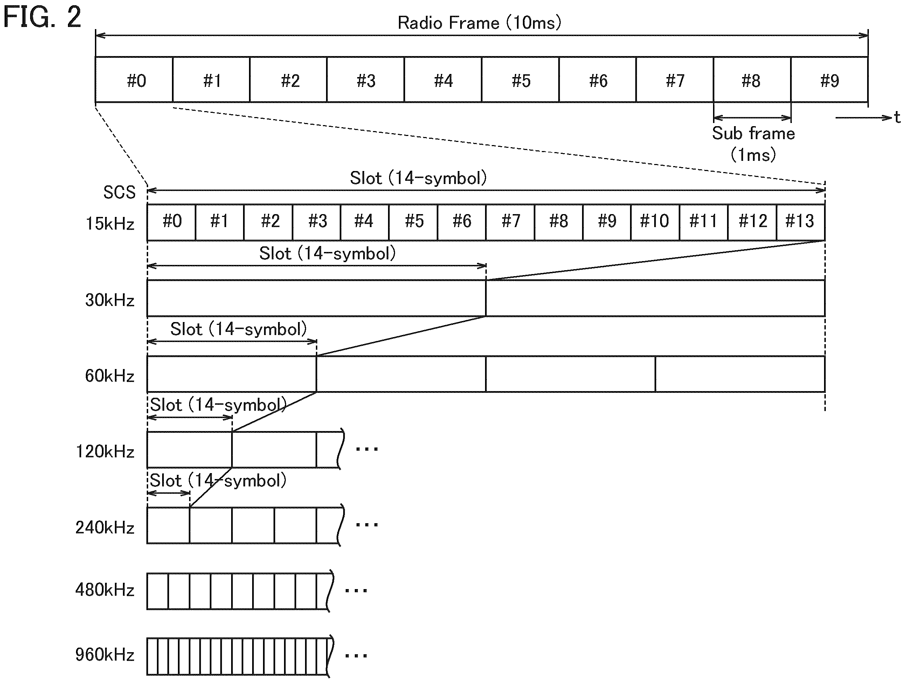

   Fig. 2 is a diagram showing an example configuration of the radio frame, subframe and slot used in radio communication system 10.
[Fig. 3]

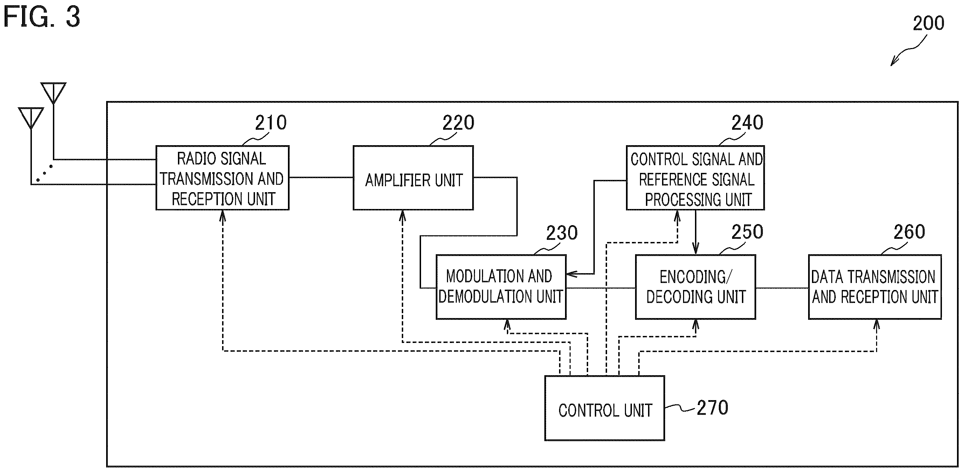

   Fig. 3 is a functional block diagram of the UE 200.
[Fig. 4]

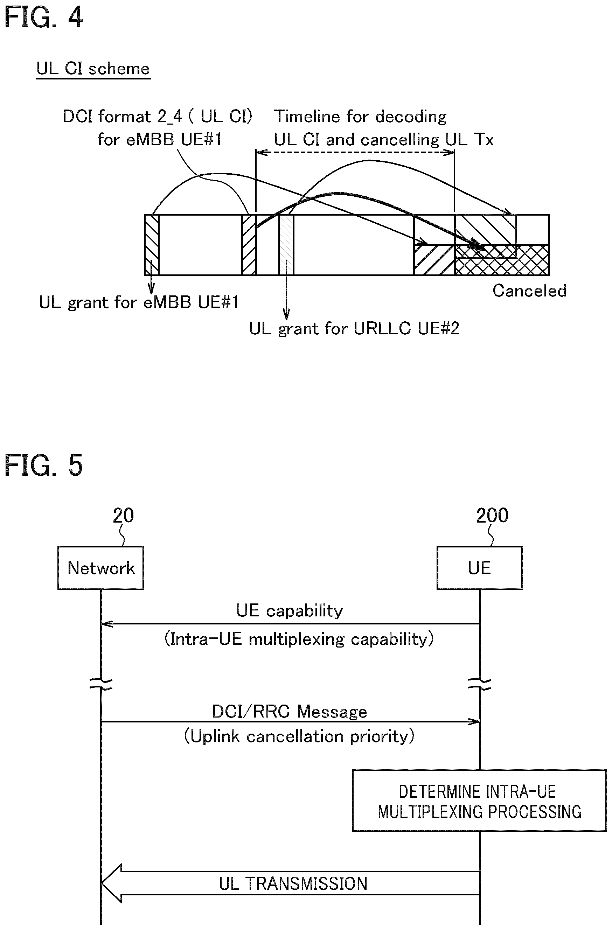

   Fig. 4 shows an example of the UL CI Scheme.
[Fig. 5]
   Fig. 5 shows an example sequence for cancellation of Intra-UE multiplexing and UL transmissions between the UE 200 and the network (NG-RAN 20).
[Fig. 6]

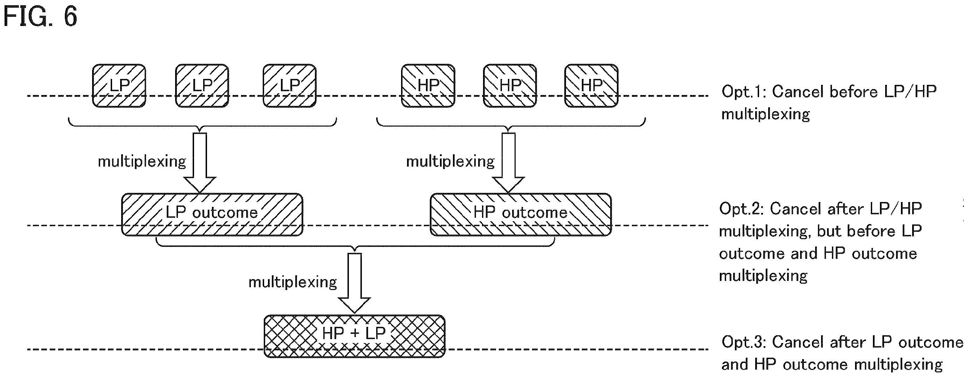

   Fig. 6 shows an example of cancellation of Intra-UE multiplexing and UL transmission in operation example 1.
[Fig. 7]

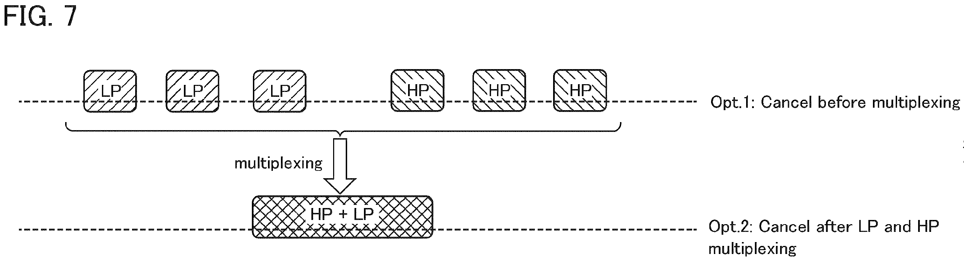

   Fig. 7 shows an example of canceling Intra-UE multiplexing and UL transmission according to operation example 2.
[Fig. 8]

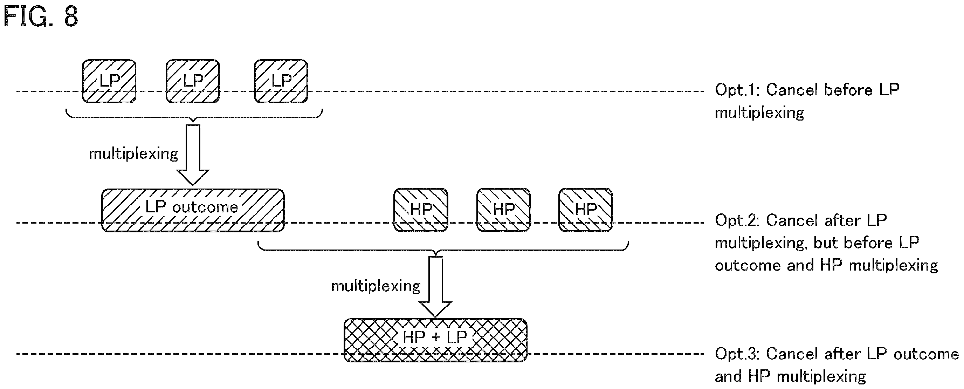

   Fig. 8 shows an example of canceling Intra-UE multiplexing and UL transmission in operation example 3.
[Fig. 9]

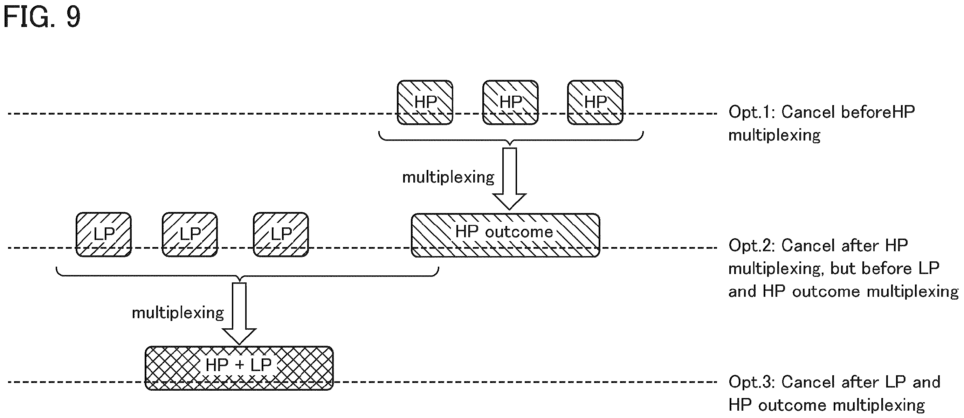

   Fig. 9 shows an example of canceling Intra-UE multiplexing and UL transmission according to operation example 4.
[Fig. 10]

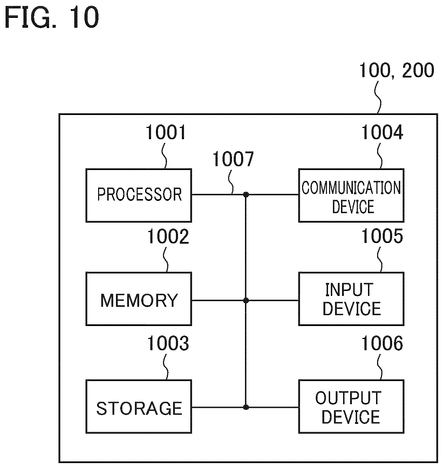

   Fig. 10 shows an example of the hardware configuration of the gNB 100 and UE 200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

Fig. 1 is an overall schematic diagram of a radio communication system 10 according to the present embodiment. The radio communication system 10 is a radio communication system according to 5G New Radio (NR) and includes a Next Generation-Radio Access Network 20 (NG-RAN 20, and user terminals 200 (User Equipment 200, below, UE 200).

The NG-RAN 20 includes a radio base station 100 (Below: gNB 100). The specific configuration of the radio communication system 10 including the number of gNBs and UEs is not limited to the example shown in Fig. 1.

The NG-RAN 20 actually includes multiple NG-RAN nodes, specifically, gNBs (or ng-eNBs), and is connected to a core network (5 GC, not shown) according to 5G. Note that NG-RAN 20 and 5 GC may simply be described as "network."

The gNB 100 is a radio base station according to NR and performs radio communication according to UE 200 and NR. By controlling radio signals transmitted from multiple antenna elements, the gNB 100 and UE 200 can support Massive MIMO that generates more directional beams, carrier aggregation (CA) that uses multiple component carriers (CCs) bundled together, and dual connectivity (DC) that simultaneously communicates between the UE and each of the multiple NG-RAN nodes.

The radio communication system 10 corresponds to FR1 and FR2. The frequency bands of each FR are as follows:

▪ FR 1: 410 MHz to 7.125 GHz
▪ FR 2: 24.25 GHz to 52.6 GHz

FR1 may use sub-carrier spacing (SCS) of 15, 30 or 60 kHz and a bandwidth (BW) of 5 ~ 100 MHz. FR2 is a higher frequency than FR1, an SCS of 60 or 120 kHz (240 kHz may be included) may be used and a bandwidth (BW) of 50 ~ 400 MHz may be used.

In addition, the radio communication system 10 may support a higher frequency band than that of FR2. Specifically, the radio communication system 10 may support frequency bands above 52.6 GHz and up to 114.25 GHz.

It may also apply Cyclic Prefix-Orthologous Frequency Division Multiplexing (CP-OFDM)/Discrete Fourier Transform-Spread (DFT-S-OFDM) with larger Sub-Carrier Spacing (SCS). Furthermore, DFT-S-OFDM may be applied not only to the uplink (UL) but also to the downlink (DL) .

Fig. 2 shows an example configuration of the radio frame, subframe and slot used in the radio communication system 10.

As shown in Fig. 2, one slot consists of 14 symbols, and the larger (wider) the SCS, the shorter the symbol period (and slot period). The number of symbols constituting one slot need not necessarily be 14 symbols (For example, 28, 56 symbols). In addition, the number of slots per subframe may vary depending on the SCS. In addition, the SCS may be wider than 240 kHz (For example, as shown in Fig. 3, 480 kHz, 960 kHz).

Note that the time direction (t) shown in Fig. 2 may be referred to as a time domain, symbol period or symbol time. The frequency direction may also be referred to as a frequency domain, resource block, subcarrier or BWP (bandwidth part).

In addition, the radio communication system 10 may use multiple Downlink Control Information (DCI). DCI may be interpreted as control information transmitted on the downlink, including scheduling information, data modulation, and channel coding rate information required for each user (UE) to demodulate data.

In particular, in this embodiment, DCI format 2_4 may be used to ensure (preempt) high-priority uplink (UL) transmissions and to cancel low-priority UL transmissions. DCI format 2_4 may be used to notify a group of UEs of physical resource blocks (PRB) and OFDM symbols that cancel corresponding UL transmissions from the UE 200. That is, DCI format 2_4 may be interpreted as a format to notify PRB and OFDM symbols that cancel UL transmissions. Cancellation may be read as cancellation, suspension or cancellation.

DCI format 2_4 may be displayed in the following format:

▪ Cancellation indication 1, Cancellation indication 2, ..., Cancellation indication N

The UE 200 may cancel UL transmissions based on UL's Cancellation Indication (which may be referred to as UL CI) indicated by DCI format 2_4, specifically, transmissions such as PUSCH (Physical Uplink Shared Channel, Uplink Data Channel) or Sounding Reference Signal (SRS). Note that PUCCH (Physical Uplink Control Channel) and Uplink Control Channel may be canceled by UL CI.

Also, the radio communication system 10 may support Intra-UE multiplexing of UL traffic with different priorities within the UE 200. Specifically, the UE 200 multiplexes low-priority (LP) traffic and high-priority (HP) traffic, and the result of multiplexing the traffic (multiplexing result) can be transmitted via UL.

Traffic may be read as channel, data channel, control channel, path, data or control data, etc. LP may also be expressed as first priority and HP as second priority (or vice versa). Multiple results may be read as outcome, outcome, outcome or output, etc. Specific examples of Intra-UE multiplexing operation will be described later.

### (2)Function block configuration of radio communication system

Next, the functional block configuration of the radio communication system 10 will be described. Specifically, the functional block configuration of the UE 200 will be described.

Fig. 3 is a functional block configuration diagram of the UE 200. As shown in Fig. 3, the UE 200 comprises a radio signal transmission and reception unit 210, an amplifier unit 220, a modulation and demodulation unit 230, a control signal and reference signal processing unit 240, an encoding/decoding unit 250, a data transmission and reception unit 260 and a control unit 270. It should be noted that the gNB 100 (radio base station) may have a roughly similar functional block configuration.

The radio signal transmission and reception unit 210 transmits and receives radio signals in accordance with NR. The radio signal transmission and reception unit 210 supports Massive MIMO, CA for bundling multiple CCs, and DC for simultaneously communicating between UE and each of the 2 NG-RAN nodes.

In particular, in this embodiment, the radio signal transmission and reception unit 210 can transmit UL traffic with different priorities over a given UL channel. Specifically, the radio signal transmission and reception unit 210 can transmit multiplexing results in which low-priority (LP) traffic (first traffic) and high-priority (HP) traffic (second traffic) are multiplexed. In this embodiment, the radio signal transmission and reception unit 210 constitutes transmission unit.

The amplifier unit 220 is composed of a PA (Power Amplifier)/LNA (Low Noise Amplifier), etc. The amplifier unit 220 amplifies the signal output from the modulation and demodulation unit 230 to a predetermined power level. The amplifier unit 220 also amplifies the RF signal output from radio signal transmission and reception unit 210.

The modulation and demodulation unit 230 performs data modulation/demodulation, transmission power setting and resource block allocation for each predetermined communication destination (such as the gNB 100). For the modulation and demodulation unit 230, Cyclic Prefix-Orthologous Frequency Division Multiplexing (CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing for various control signals transmitted and received by the UE 200 and processing for various reference signals transmitted and received by the UE 200.

Specifically, the control signal and reference signal processing unit 240 receives various control signals transmitted from the gNB 100 via a predetermined control channel, such as control signals of a radio resource control layer (RRC). The control signal and reference signal processing unit 240 also transmits various control signals toward the gNB 100 via a predetermined control channel.

The control signal and reference signal processing unit 240 performs processing using a reference signal (RS) such as a Demodulation Reference Signal (DMRS) and a Phase Tracking Reference Signal (PTRS).

DMRS is a known reference signal (pilot signal) between individual base stations and terminals for estimating the fading channel used for data demodulation. PTRS is a reference signal for individual terminals for estimating phase noise, which is a problem in high frequency bands.

In addition to DMRS and PTRS, the reference signal may include Channel State Information-Reference Signal (CSI-RS), Sounding Reference Signal (SRS), and Positioning Reference Signal (PRS) for location information.

In addition, the channel includes a control channel and a data channel. The control channel may include a PDCCH (Physical Downlink Control Channel), a PUCCH (Physical Uplink Control Channel), a RACH (Downlink Control Information (DCI) including Random Access Channel, Random Access Radio Network Temporary Identifier (RA-RNTI)), and a Physical Broadcast Channel (PBCH).

The data channel may also include a PDSCH (Physical Downlink Shared Channel), and a PUSCH (Physical Uplink Shared Channel). Data may mean data transmitted through a data channel.

PUCCH may be interpreted as a UL physical channel used to transmit Uplink Control Information (UCI). UCI may be transmitted by either PUCCH or PUSCH as the situation requires. DCI may always be transmitted by PDCCH and not via PDSCH.

UCI may include at least either ACK/NACK of hybrid ARQ (HARQ), scheduling request (SR) from UE 200 and Channel State Information (CSI) .

Also, timing and radio resources for transmitting PUCCH may be controlled by DCI as well as data channel.

The encoding/decoding unit 250 performs data division/concatenation and channel coding/decoding for each predetermined communication destination (gNB 100 or other gNB).

Specifically, the encoding/decoding unit 250 divides the data output from data transmission and reception unit 260 into predetermined sizes and performs channel coding on the divided data. The encoding/decoding unit 250 also decodes the data output from modulation and demodulation unit 230 and concatenates the decoded data.

The data transmission and reception unit 260 transmits and receives protocol data units (PDU) and service data units (SDU). Specifically, the data transmission and reception unit 260 performs assembly/disassembly of PDUs/SDUs in multiple layers (Media access control layer (MAC), radio link control layer (RLC), and packet data convergence protocol layer (PDCP), etc.). The data transmission and reception unit 260 also performs error correction and retransmission control of data based on a hybrid automatic repeat request (ARQ).

The control unit 270 controls each functional block that constitutes the UE 200. In particular, in this embodiment, control unit 270 can perform multiplexing processing of UL traffic with different priorities.

Specifically, the control unit 270 can perform multiplexing operations between traffic with low priority (first priority) (first traffic) and traffic with high priority (may be expressed as a second priority different from first priority), which has a higher priority than low priority (second traffic). Note that multiplexing may be read as a term such as multiplexing, combining or superimposing. Also, as mentioned above, traffic may be read as channel, data channel, control channel, path, data or control data, etc.

The control unit 270 may multiplex multiple low priority (LP) traffic (first traffic) and multiple high priority (HP) traffic (second traffic), and further multiplex the result of multiplexing multiple LP traffic (first multiplex result) and the result of multiplexing multiple HP traffic (second multiplex result).

The control unit 270 may also generate multiplex results by multiplexing one or more LP traffic and one or more HP traffic.

Alternatively, the control unit 270 may generate multiplex results by multiplexing multiple LP traffic and generate multiplex results by multiplexing the multiplex results and one or more HP traffic. Conversely, control unit 270 may generate a multiplexed result by multiplexing multiple HP traffic and generate a multiplexed result by multiplexing the multiplexed result with one or more LP traffic.

The multiplexing method between LP traffic and HP traffic is not limited to these methods. For example, the control unit 270 may execute multiple processes for multiplexing one or more LP traffic and one or more HP traffic, and execute a hierarchical multiplexing process for further multiplexing the multiple results. It is also acceptable to have more layers of multiplexing processing.

Also, in the multiplexing processing, the control unit 270 may cancel an uplink transmission that uses radio resources that overlap with the transmission of multiplexing results. Specifically, control unit 270 may perform control on the cancellation of an uplink transmission (UL transmission) based on UL CI.

More specifically, the control unit 270 may cancel a PUSCH that overlaps with the transmission of multiple results. Also, the uplink transmission may include a reference signal such as SRS. In addition, PUCCH may be subject to cancellation.

The control unit 270 may cancel UL transmissions in any of the layers of multiplexing described above. For example, control unit 270 may cancel UL transmissions before multiplexing multiple LP traffic and/or multiple HP traffic.

The control unit 270 may also cancel UL transmissions after multiplexing LP traffic and/or HP traffic but before multiplexing multiple LP traffic multiplexed results (first multiplexed result) and multiple HP traffic multiplexed results (second multiplexed result).

Alternatively, the control unit 270 may cancel UL transmissions after multiplexing multiple LP traffic multiplexed results (first multiplexed result) and multiple HP traffic multiplexed results (second multiplexed result).

The control unit 270 may also cancel UL transmissions after multiplexing one or more LP traffic with one or more HP traffic.

### (3)Operation of radio communication system

Next, the operation of radio communication system 10 is described. Specifically, the operation related to the intra-UE multiplexing of UL traffic with different priorities within the UE 200 and the cancellation of UL transmissions by UL Cancellation Indication (UL CI) indicated by DCI format 2_4 is described.

### (3.1) Assumptions

For Intra-UE multiplexing, the following processing order may be defined:
▪The processing order for Intra-UE multiplexing of traffic (channels) with the same priority and the priority of traffic (channels) with different priorities may be as follows:
   ▪LP channel multiplexing

In this case, if there is a radio resource overlap between the LP and HP channels, the LP channel may be canceled.

### ▪HP Channel Multiplexing

In this case, if there is a radio resource overlap between the LP and HP channels, the LP channel may be canceled. Note that the radio resources may include time resources and frequency resources. While the LP channel and HP channel may be interpreted as synonymous with LP traffic and HP traffic as described above, the terms LP channel and HP channel are mainly used below.

▪The relationship between the processing order of Intra-UE multiplexing and UL CI or dynamic slot format indication (SFI) may be as follows:
   ▪Intra-UE multiplexing is performed first
   ▪UL CI or Dynamic SFI cancels UL transmission

The relationship between the processing order of Intra-UE multiplexing and semi-static (semi-static) downlink (DL) symbol or synchronous signal block (SSB (SS/PBCH Block)) may be the same or different from UL CI, etc. A semi-static downlink (DL) symbol may be interpreted as a symbol whose use (For example, whether it is UL/DL, whether it is always available, etc.) can be changed by settings.

Fig. 4 shows an example of the UL CI Scheme. As mentioned above, DCI format 2_4 may be used in radio communication system 10 to preempt high priority UL transmissions and cancel low priority UL transmissions.

As shown in Fig. 4, when DCI format 2_4 informs UL CI to UE # 1 for eMBB (enhanced mobile broadband), UE # 1 cancels UL transmissions. This ensures UL transmission of UE # 2 for URLLC (Ultra-Reliable and Low Latency Communications), that is, a high-priority UL transmission.

For Intra-UE multiplexing, a UE 200 may follow the conventional processing order (That is, processing order without multiplexing) if multiplexing of traffic with different priorities (channels) 200 is not enabled. Moreover, a UE 200 may follow the conventional processing order even if the multiplexing condition is not satisfied, although the multiplexing is enabled.

On the other hand, if the multiplexing is enabled, the multiplexing condition is also satisfied, and the UL channel overlaps the radio resources indicated by UL CI, Dynamic SFI, semi-static DL symbol or SSB, the UE 200 may operate according to any of the following operation examples.

### (3.2) Operation Examples

In the following, an outline of the operation related to the Intra-UE multiplexing of the UE 200 and the cancellation of UL transmission when the transmission of multiplexed results overlaps with the radio resources indicated by UL CI, etc., and some operation examples are described.

### (3.2.1) Outline of Operation

For multiplexing processing between LP and HP channels (order of multiplexing), either of the following may be used.
▪Possibility 1: Multiplexing processing is performed between channels of the same priority, and then multiplexing processing is performed between the multiple results (outcome) of the LP channel and the multiple results of the HP channel.
▪Possibility 2: Multiplexing processing is performed by mixing all LP and HP channels (similar to the current procedure for multiplexing multiple UL PUCCHs of the same priority).
▪Possibility 3: Multiplexing processing is performed between LP channels, followed by multiplexing results of LP channels and multiplexing processing of HP channels.
▪Possibility 4: Multiplexing processing is performed between HP channels, followed by multiplexing results of HP channels and multiplexing processing of LP channels.

Fig. 5 shows an example sequence for canceling Intra-UE multiplexing and UL transmissions between the UE 200 and the network (NG-RAN 20).

As shown in Fig. 5, the UE 200 can transmit UE capability (which may be called UE Capability Information) to the network (NG-RAN 20) indicating the capability of the UE 200. Note that the UE 200 may transmit the UE Capability Information in response to receiving an inquiry (UE Capability Inquiry) from the network about the capability of the UE 200.

The UE capability may include the capabilities related to Intra-UE multiplexing described above. The capabilities related to Intra-UE multiplexing may indicate which multiplexing processing (order of multiplexing) of the Possibility 1 ~ 4 described above is supported.

The network may send upper-layer (For example, RRC) messages or DCI to the UE 200 based on the received UE Capability Information. The RRC message may include uplinkCancellationPriority indicating the priority for canceling UL transmissions.

The uplinkCancellationPriority is specified in 3 GPP TS 38.331. The DCI (For example, DCI format 2_4) may include an indication similar to the uplinkCancellationPriority.

The uplinkCancellationPriority can set the cancellation behavior of UL transmissions when both the UL CI and the intra-UE priority indicator are set for a particular UE. If the uplinkCancellationPriority field is present, the UL CI may only apply to UL transmissions that are indicated or set as low priority. On the other hand, if the uplinkCancellationPriority field is absent, the UL CI may apply to UL transmissions regardless of the priority.

### (3.2.2) Example 1

In this operating example, the UE 200 applies Possibility 1 regarding the above-described Intra-UE multiplexing. Fig. 6 shows an example of canceling the Intra-UE multiplexing and UL transmission relating to the operating example 1. As shown in Fig. 6, the UE 200 may multiplex multiple channels with the same priority.

Specifically, the UE 200 multiplexes multiple LP channels to produce a multiplex outcome (LP outcome). The UE 200 also multiplexes multiple HP channels to produce a multiplex outcome (HP outcome). Furthermore, the UE 200 multiplexes LP outcome and HP outcome to produce a multiplex outcome (HP + LP).

The contents of the LP channel and HP channel may include HARQ-ACK, scheduling request (SR), and Channel State Information (CSI) (hereinafter the same). The contents of the LP channel and HP channel are not limited to these and may include other contents.

In the case of this operating example, the UE 200 may cancel UL transmissions when they overlap with radio resources indicated by UL CI, etc., according to one of the following options:
▪(Option 1): Before multiplexing LP and HP channels, the UE 200 cancels dedicated channels (dedicated channel, LP channel and/or HP channel) that overlap with radio resources indicated by UL CI.
.(Option 2): After multiplexing LP and HP channels, but before multiplexing LP and HP outcomes, the UE 200 cancels dedicated channels that overlap with radio resources indicated by UL CI.
▪(Option 3): After multiplexing LP and HP outcomes, the UE 200 cancels dedicated channels that overlap with radio resources indicated by UL CI.

The dedicated channel (Channels to be canceled that contain only LP or HP channels or both LP and HP channels) may be set according to parameters of the upper layer (such as RRC) or may be defined in advance in 3GPP specifications. Alternatively, the dedicated channel may be designated by the DCI. In the case of the RRC, the uplinkCancellationPriority may be used to designate the dedicated channel, or a new parameter may be provided.

Also, the aforementioned option 1 ~ 3 for canceling the dedicated channel may be applied in combination depending on the cancellation target and/or the 3 GPP specifications.

### (3.2.3) Example 2

In this example of operation, the UE 200 applies Possibility 2 regarding the above-described Intra-UE multiplexing. Fig. 7 shows an example of canceling the Intra-UE multiplexing and UL transmission relating to the example of operation 2. As shown in Fig. 7, the UE 200 may generate a multiplexed result (HP + LP) by multiplexing one or more LP channels and one or more HP channels.

In the case of this operating example, the UE 200 may cancel UL transmissions when they overlap with radio resources indicated by UL CI, etc., according to one of the following options:
▪(Option 1): Before multiplexing LP and HP channels, the UE 200 cancels dedicated channels (dedicated channel, LP channel and/or HP channel) that overlap with radio resources indicated by UL CI.
▪(Option 2): After multiplexing LP and HP channels, the UE 200 cancels dedicated channels that overlap with radio resources indicated by UL CI.

As in Operation Example 1, dedicated channels (Channels to be canceled that contain only LP or HP channels or both LP and HP channels) may be set according to parameters of an upper layer (such as RRC) or may be defined in advance in 3GPP specifications. Alternatively, the dedicated channels may be designated by DCI. In the case of RRC, the uplinkCancellationPriority may be used to designate the dedicated channels, or new parameters may be provided.

In addition, the aforementioned options 1 and 2 for canceling the dedicated channel may be applied in combination depending on the cancellation target and/or 3GPP specifications.

### (3.2.4) Example 3

In this example of operation, the UE 200 applies Possibility 3 regarding the Intra-UE multiplexing described above. Fig. 8 shows an example of canceling the Intra-UE multiplexing and UL transmission relating to the example of operation 3. As shown in Fig. 8, the UE 200 may generate a multiple result (LP outcome) by multiplexing multiple LP channels and generate a multiple result (HP + LP) by multiplexing the multiple result and one or more HP channels.

In the case of this operating example, the UE 200 may cancel UL transmission in the event of overlap with radio resources indicated by UL CI, etc., according to one of the following options:
▪(Option 1): Before multiplexing multiple LP channels, the UE 200 cancels LP channels that overlap with radio resources indicated by UL CI.
▪(Option 2): The UE 200 cancels the LP channel multiplexing outcome and the dedicated channel (dedicated channel, LP channel and/or HP channel) that overlaps the radio resources indicated by UL CI before multiplexing with multiple HP channels.
▪(Option 3): The UE 200 cancels the dedicated channel that overlaps the radio resources indicated by UL CI after multiplexing with the LP outcome and multiple HP channels.

As in Operation Example 1, the dedicated channel (Channels to be canceled that contain only LP or HP channels or both LP and HP channels) may be set according to the parameters of the upper layer (such as RRC) or may be defined in advance in the 3GPP specifications. Alternatively, the dedicated channel may be specified by the DCI. In the case of the RRC, the uplinkCancellationPriority may be used to specify the dedicated channel, or a new parameter may be provided.

Also, the aforementioned option 1 ~ 3 for canceling the dedicated channel may be applied in combination depending on the cancellation target and/or the 3 GPP specifications.

### (3.2.5) Example 4

In this operation example, the UE 200 applies Possibility 4 regarding the Intra-UE multiplexing described above. Fig. 9 shows an example of canceling the Intra-UE multiplexing and UL transmission relating to operation example 4. As shown in Fig. 9, the UE 200 may generate a multiple result (HP outcome) by multiplexing multiple HP channels and generate a multiple result (HP + LP) by multiplexing the multiple result and one or more LP channels.

In the case of this operating example, the UE 200 may cancel UL transmission in the event of overlap with radio resources indicated by UL CI, etc., according to one of the following options:
▪(Option 1): Before multiplexing multiple HP channels, the UE 200 cancels HP channels that overlap with radio resources indicated by UL CI.
▪(Option 2): Before multiplexing with HP channel outcomes and multiple LP channels, the UE 200 cancels the dedicated channel (dedicated channel, LP channel and/or HP channel) that overlaps the radio resources indicated by UL CI.
▪(Option 3): After multiplexing with HP outcomes and multiple LP channels, the UE 200 cancels the dedicated channel that overlaps the radio resources indicated by UL CI.

As in Operation Example 1, the dedicated channel (Channels to be canceled that contain only LP or HP channels or both LP and HP channels) may be set by the parameters of an upper layer (such as RRC) or may be defined in advance in the 3GPP specifications. Alternatively, the dedicated channel may be designated by the DCI. In the case of the RRC, the uplinkCancellationPriority may be used to designate the dedicated channel, or a new parameter may be provided.

Also, the aforementioned option 1 ~ 3 for canceling the dedicated channel may be applied in combination depending on the cancellation target and/or the 3 GPP specifications.

### (3.2.6) Modifications

The following modifications may be made to the operation examples described above. For example, cancellation of UL transmissions (dedicated channels) by UL CI may be replaced by cancellation by Dynamic SFI, semi-static DL symbols, or SSB. In addition, cancellation by UL CI, Dynamic SFI, semi-static DL symbols, or SSB may be combined.

As described above, cancellation targets for UL transmissions (dedicated channels) may include only LP or HP channels, or both LP and HP channels, but UL channels subject to cancellation may include PUCCH and/or PUSCH.

Also, UL CI may include only PUSCH or SRS as in 3 GPP Release 16 (In this case, there is no impact on the relevant 3GPP specifications). Note that the priority of PUSCH to be canceled may be set by a parameter in the upper layer (such as RRC) (For example, the uplinkCancellationPriority described above).

Alternatively, UL CI may cancel PUCCH in addition to PUSCH and SRS. This may achieve even better spectral efficiency. Again, the priority of PUSCH to be canceled and PUSCH to be canceled may be set by the upper layer parameter (uplinkCancellationPriority). Furthermore, in this case also, UL CI may be replaced by cancellation by Dynamic SFI, semi-static DL symbol or SSB.

### (4)Operational effects

According to the above described embodiment, the following working effects can be obtained. Specifically, the UE 200 can perform multiplexing processing between the LP channel and the HP channel with higher priority than lower priority, and in the multiplexing processing, cancel UL transmissions that use radio resources that overlap with the transmission of multiplexed results (LP outcome, HP outcome, etc.).

Thus, the UE 200 can realize efficient multiplexing processing even when the transmission of multiplexed results overlaps with radio resources indicated by UL CI, etc. That is, according to UE 200, the multiplexing of UL traffic (channels) with different priorities can be realized more reliably even when radio resources overlap due to other indications such as UL CI.

In this embodiment, UE 200 can perform various multiplexing operations of the aforementioned Possibility 1 ~ 4. Therefore, appropriate multiplexing operations can be realized according to the contents, requirements, etc., of the LP and/or HP channels.

In this embodiment, the UE 200 can cancel the UL transmission before multiplexing multiple LP channels and/or multiple HP channels, after multiplexing the LP and/or HP channels, before multiplexing multiple LP channel multiplexed results with multiple HP channels, after multiplexing multiple LP channel multiplexed results with multiple HP channels, or after multiplexing one or more LP channels with one or more HP channels.

For this reason, the UE 200 can cancel the UL transmission in an appropriate multiplexing hierarchy considering the load of multiplexing processing, the effect of the UE 200 upon canceling the UL transmission, etc., and can contribute to efficient operation such as saving power consumption.

### (5)Other Embodiments

Although the above description of the embodiment is not limited to the description of the embodiment, it is obvious to those skilled in the art that various modifications and improvements are possible.

For example, while the above embodiment assumed a radio communication system according to 5G (NR), radio communication system 10 may be a radio communication system according to a scheme called Beyond 5G, 5G Evolution or 6 G.

In addition, the block diagram (Fig. 3) used for the description of the above embodiment shows a block of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that makes transmission work is called a transmitting unit (transmission unit) or transmitter. In either case, as described above, the implementation method is not particularly limited.

Furthermore, the above-mentioned gNB 100 and UE 200 (the device) may function as a computer for processing the radio communication method of the present disclosure. Fig. 10 shows an example of the hardware configuration of the device. As shown in Fig. 10, the device may be configured as a computer device including a processor 1001, a memory 1002, a storage 1003, an communication device 1004, an input device 1005, an output device 1006, a bus 1007, etc.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see Fig. 3) is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001 controls the entire computer by, for example, operating the operating system. The processor 1001 may consist of a central processing unit (CPU) including interfaces with peripheral devices, controllers, arithmetic units, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, etc. Memory 1002 may store programs (program code), software modules, etc., that are capable of executing a method according to one embodiment of this disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device such as a processor 1001 and a memory 1002 is connected by a bus 1007 for communicating information. The bus 1007 may be configured using a single bus or different buses for each device.

Furthermore, the device may be configured including hardware such as a microprocessor, a digital signal processor (DSP), an application specific integrated circuit (ASIC), a programmable logic device (PLD), a field programmable gate array (FPGA), etc., with which some or all of the functional blocks may be implemented. For example, the processor 1001 may be implemented by using at least one of these hardware.

Also, the notification of information is not limited to the mode/embodiment described in this disclosure and may be made using other methods. For example, the notification of information may be carried out by physical layer signaling (e.g., Downlink Control Information (DCI), Uplink Control Information (UCI), higher layer signaling (e.g., RRC signaling, Medium Access Control (MAC) signaling, notification information (Master Information Block (MIB), System Information Block (SIB)), other signals or a combination thereof. The RRC signaling may also be referred to as an RRC message, e.g., an RRC Connection Setup message, an RRC Connection Reconfiguration message, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc., of each mode/embodiment described in this disclosure may be reordered as long as there is no conflict. For example, the method described in this disclosure uses an illustrative order to present elements of various steps and is not limited to the specific order presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in this disclosure may be used alone, in combination, or switched over as practice progresses. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). Also, the signal may be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, airplanes, etc.), an unmanned mobile body (For example, drones, self-driving cars, etc.) or a robot (manned or unmanned). At least one of a base station and a mobile station can be a device that does not necessarily move during the communication operation. For example, at least one of a base station and a mobile station may be an Internet of Things (IoT) device such as a sensor.

The base station in this disclosure may also be read as a mobile station (user terminal, hereinafter the same). For example, each mode/embodiment of this disclosure may be applied to a configuration in which communication between a base station and a mobile station is replaced with communication between multiple mobile stations (For example, it may be called Device-to-Device (D2D), Vehicle-to-Everything (V2X), etc.). In this case, the mobile station may have the function of the base station. In addition, words such as "up" and "down" may be replaced with words corresponding to communication between terminals (For example, "side"). For example, terms an uplink channel, a downlink channel, or the like may be read as a side channel.

Similarly, mobile stations in this disclosure may be replaced with base stations. In this case, the base station may have the function of the mobile station. A radio frame may be composed of one or more frames in the time domain. Each frame or frames in the time domain may be referred to as a subframe. A subframe may be further configured by one or more slots in the time domain. Subframes may have a fixed length of time (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. A PDSCH (or PUSCH) transmitted in units of time larger than a minislot may be called a PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframes and TTI may be a subframe (1 ms) in an existing LTE, may have a duration shorter than 1 ms (For example, 1 -13 symbols), or may have a duration longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. In addition, the number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be identified by an index of RBs relative to the common reference point of the carrier. PRB may be defined in BWP and numbered within that BWP.

BWP may include UL BWP (UL BWP) and DL BWP (DL BWP). One or a plurality of BWPs may be configured in one carrier for the UE.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" and "determination" may include regarding some action as "judgment" and "determination." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 NG-RAN
100 gNB
200 UE
210 radio signal transmission and reception unit
220 amplifier unit
230 modulation and demodulation unit
240 control signal and reference signal processing unit
250 encoding/decoding unit
260 data transmission and reception unit
270 control unit
1001 processor
1002 memory
1003 storage
1004 communication device
1005 input device
1006 output device
1007 bus

## Claims

1. A terminal comprising:
a control unit that performs multiplexing processing of a first traffic with a first priority and a second traffic with a second priority different from the first priority; and
a transmission unit that transmits a multiplexing result in which the first traffic and the second traffic are multiplexed, wherein
the control unit cancels an uplink transmission that uses radio resources overlapping with a transmission of the multiplexing result in the multiplexing process.

2. The terminal according to claim 1, wherein the control unit:
multiplexes a plurality of the first traffic, and multiplexes a plurality of the second traffic, and
further multiplexing a first multiplexing result multiplexing the plurality of the first traffic and a second multiplexing result multiplexing the plurality of the second traffic.

3. The terminal according to claim 2, wherein the control unit cancels the uplink transmission before multiplexing the plurality of the first traffic and the plurality of the second traffic.

4. The terminal according to claim 2, wherein the control unit cancels the uplink transmission before multiplexing the first multiplexing result and the second multiplexing result.

5. The terminal according to claim 2, wherein the control unit cancels the uplink transmission after multiplexing the first multiplexing result and the second multiplexing result.

6. A radio communication method including the steps of:
performing multiplexing processing of a first traffic with a first priority and a second traffic with a second priority different from the first priority, and
transmitting a multiplexing result in which the first traffic and the second traffic are multiplexed, wherein
in the multiplexing process, canceling an uplink transmission that uses radio resources overlapping with a transmission of the multiplexing result in the multiplexing process.
